(19)

Europäisches
Patentamt
European
Patent Office
Office européen
des brevets

(11)     **EP 1 986 416 A1**

(12)     **EUROPEAN PATENT APPLICATION**

(43) Date of publication:
    **29.10.2008  Bulletin 2008/44**

(51) Int Cl.:
    *H04N 1/60* (2006.01)          *H04N 1/64* (2006.01)

(21) Application number: **07251778.2**

(22) Date of filing: **27.04.2007**

(84) Designated Contracting States:
    **AT BE BG CH CY CZ DE DK EE ES FI FR GB GR
    HU IE IS IT LI LT LU LV MC MT NL PL PT RO SE
    SI SK TR**
    Designated Extension States:
    **AL BA HR MK RS**

(71) Applicant: **TTPCOM Limited**
    **Royston,
    Hertfordshire, SG8 6HQ (GB)**

(72) Inventor: **Vinding, René C.**
    **9000 Aalborg (DK)**

(74) Representative: **Gillard, Matthew Paul et al**
    **Withers & Rogers LLP
    Goldings House
    2 Hays Lane
    London
    SE1 2HW (GB)**

(54)     **Colour mapping**

(57)     A colour point from a first set of points in a colour space is selected to stand in for a colour point from a second, larger set of colour points in the colour space. The second set colour point is hashed to produce an address that is used to look up a group of one or more first set colour point identifiers, each corresponding to a first set colour point that is capable of producing the address of the group if subjected to the hash function. Where the group contains more than one first set colour point, an error test is used to determine which of them is the best match for the second set colour point.

Figure 5

**Description**

The present invention relates primarily to methods of, and to apparatus for, selecting a colour point from a first set of points in a colour space to stand in for a colour point from a second, larger set of colour points in the colour space.

It is common to represent a colour image as a raster of pixels where the colour and intensity of each pixel is defined by the amplitude of three colours, these being specific shades of red (R), green (G), and blue (B). For obvious reasons, this is referred to as an "RGB" representation. For most purposes, it is acceptable to code the colour intensities into 8-bit numbers, each colour therefore having a relative intensity between 0 and 255. Each pixel therefore requires 3 bytes of data to represent it. A modem computer display device such as a CRT is well able to represent colours to this precision. It is convenient to refer to the R, G, and B values of a pixel together as a "colour vector" specifying a "colour point" in a "colour space".

Today, many systems use colour images essentially represented in this way, including digital cameras (still and video), and image coding schemes such as the JPEG standard, and therefore many images are stored and transmitted using such coding and have to be displayed on many different types of device, including for example mobile phones.

A particular problem arises with devices such as mobile phones because they tend to use small and low-cost displays which have much more limited colour rendition capability than the displays used with, for example, PCs. The 24-bit RGB representation allows $2^{24}$, or 16,777,216, colours; whereas a mobile phone display might allow a "palette" of only $2^8$, or 256 colours. Even though there are many fewer colours possible on a restricted display of this kind, each of those colours will have a 24-bit RGB representation and therefore they constitute a small subset of all the possible 24-bit points. Therefore, when an image using 24-bit RGB representation needs to be displayed on such a phone, it is necessary to transform the colour vector of each pixel to the nearest colour that can be displayed. Alternatively, even if a larger display palette is possible, it may be convenient to restrict the palette for special applications to a smaller number for convenience or efficiency in processing, for example for graphic icons used in user-interface designs.

One way to find the mapping from the 24-bit RGB domain to a smaller colour palette is to form the squared Pythagorean distance between the 24-bit RGB representation and a possible representation R'G'B' in the colour space of the display:

$$D = (R-R')^2 + (G-G')^2 + (B-B')^2$$

and to find the R'G'B' value or values which give a distance less than some error criterion. This computation may be quite intensive if, for example, an exhaustive search is used.

An alternative to such a search would be to pre-compute, for each RGB colour, the closest R'G'B' colour and to store this in an entry in a lookup table. However, such a table would need to have a $2^{24}$ entries, which would require 16 megabytes of memory.

Because image translation in real-time or near real-time is needed for certain applications (for example video telephony), efficient conversion methods are required which are neither computationally intensive nor require large amounts of memory.

According to one aspect, the invention comprises a method of selecting a colour point from a first set of points in a colour space to stand in for a colour point from a second, larger set of colour points in said space, the method comprising applying a hash function to the second set colour point to produce an address, retrieving via the address a group of one or more first set colour point identifiers, each identifier specifying a first set colour point that is capable of producing said address if subjected to the hash function and, where said group contains a plurality of first set colour points, determining which of them is the best match for said second set colour point according to a given error test. The invention also provides apparatus for selecting a colour point from a first set of points in a colour space to stand in for a colour point from a second, larger set of colour points in said space, the apparatus comprising means for applying a hash function to the second set colour point to produce an address, data storage containing groups of one or more first set colour point identifiers, each group being indexed by an address and the first set colour point or points within the group being capable of producing said address if subjected to the hash function, means for applying to the memory the address deduced from the second set colour point in order to retrieve the corresponding group of first set colour points and means for determining, in the case where the retrieved group contains multiple first set colour points, which of the first set colour points of the retrieved group is the best match for said second set colour point according to a given error test.

Thus, the invention provides a way of selecting colours from a first set to stand in for colours from a second, larger set that is capable of being implemented in a way that is less computationally intensive than calculating on the fly best first set matches for each second set colour and which is less memory intensive than storing a precomputed best match in the first set for each second set colour.

The invention also extends to a method of indexing a set of colour points, the method comprising determining the point or points from the set that produce a given hash value when subjected to a given hash function and associating the point or points so determined as a group accessible via said hash value. A set of colour points organised in this way can be used to look up candidates that can be used to stand in for members of another set of colour points.

The invention also relates to data storage containing a set of colour point identifiers, wherein the storage contains groups of one or more of said identifiers, the point or points in each group producing the same hash value when subjected to a given hash function and each group being retrievable via its hash value. Data storage loaded in this way can be read to provide candidates to stand in for members of another set of colour points.

In certain embodiments, the colour points are specified using the known 24-bit RGB representation. However, this need not always be the case.

In certain embodiments, the identifiers are pointers to another representation of the colour. For example, the other representation could be a 24-bit RGB representation of the colour. In other embodiments, the identifiers could for example be of the 24-bit RGB representation.

In certain embodiments, the hash function removes one or more of the least significant bits from at least one of several colour components defining a colour point. Of course, other types of hash function will also be appropriate.

In certain embodiments, the error test measures a distance between a second set colour point and a first set colour point that could potentially act as a stand in. Of course, it will be apparent that other types of error metric could be used to distinguish a best matching first set colour point from a group of such points.

In certain embodiments, a group of colour identifiers whose colour points share a hash value can be associated with a flag indicating the size of the group. In certain circumstances, this reduces the processing burden: if the group contains one member, then it is unnecessary to initiate calculations on the group's content to determine a best match.

Above, various aspects of the invention have been presented in method terms. The invention also extends to programs for causing data processing apparatus, such as PCs and microprocessors, to perform such methods. The invention also extends to data storage, such as hard drives and memory chips, containing such programs.

The invention can be put to use in the context of a mobile telephone whose display is capable of rendering fewer colours than the set of colour possibilities available to an image that is required to be displayed. Of course, the invention could be applied to other types of device, such as personal digital assistants (PDAs).

By way of example only, certain embodiments of the invention will now be described with reference to the accompanying drawings, in which:

Figure 1 is a representation of a look up table;

Figure 2 is a flow diagram describing a process for populating a look up table;

Figure 3 shows a look up table of the type that can be produced by the process outlined in Figure 2;

Figure 4 is a schematic diagram of a mobile telephone; and

Figure 5 is a flow diagram describing a colour mapping process performed within the telephone of Figure 4 in reliance upon the look up table of Figure 3.

An embodiment of the invention will now be described in which 24-bit RGB colour images are required to be displayed on a mobile telephone whose screen can render only a subset of 256 of the $2^{24}$ colours that can be specified using a 24-bit RGB notation.

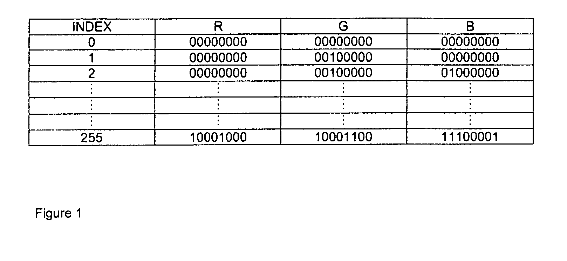

As an initial step, a palette table and an attendant colour mapping candidate (CMC) table are created using a process that will shortly be described and which is carried out in, for example, a PC. These tables are then stored in non-volatile memory in a mobile telephone during the production process so that they can be used, in a manner to be described later, to assist in locating a suitable stand-in from amongst the telephone's 256 available colours for a pixel of an imported 24-bit RGB image that is required to be displayed on the telephone. The 256 24-bit colours are arranged into a "palette table". Each row of the palette table contains one of these 256 colours and an 8-bit index number. Each of the colours has a unique index number in the (decimal) range 0 to 256. An example of how the palette table might look is given in Figure 1. In each row of the palette table shown in Figure 1, the entry in the first column is the 8-bit index number (rendered in decimal in the figure) and the entries in the second, third and fourth columns are the 8-bit red, green and blue intensities, respectively, of the colour specified by the particular row.

The palette table is then used in the generation of the colour mapping table, in conjunction with a hash function. The hash function operates on a 24-bit RGB colour to reduce it to an 8-bit word, as follows. The hash function operates by concatenating the three most significant bits of the 8-bit red intensity value with the three most significant bits of the 8-bit green intensity value and the two most significant bits of the 8-bit blue intensity value. Consider as an example the case where the hash function operates on the 24-bit colour 01011010 1110110000110010. The result of the hash function will be 01011100.

The CMC table contains rows each having an index number and one or more colour pointers. A colour pointer is the index value of a row in the palette table and therefore specifies one of the 256 colours that the telephone can display.

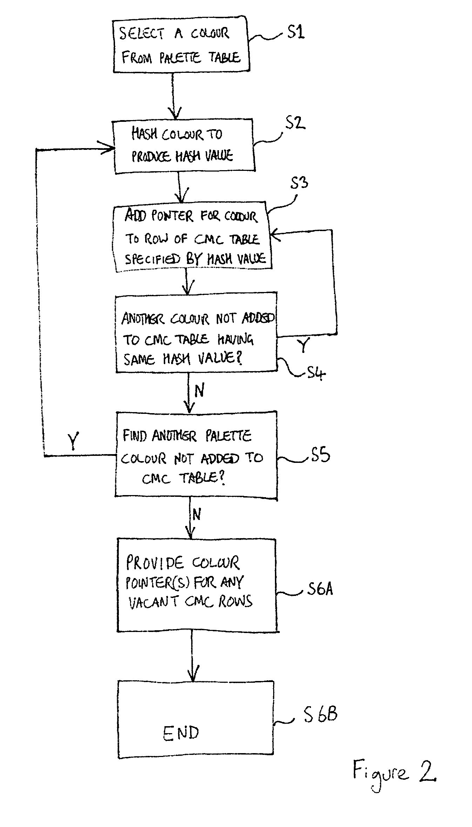

The process of constructing the CMC table is shown in Figure 2. The process commences in step S1 with the selection of a 24-bit colour from the palette table. The process can begin with the 24-bit colour specified by index 0 of the palette table but this need not be so. In step S2, the selected 24-bit colour from the palette table is subjected to the hash function to produce a hash value. In step S3, the hash value is used to index a row of the CMC table and the colour pointer of the 24-bit colour is added to that row of the CMC table.

In step S4, it is determined whether or not there is another colour in the palette table that has not yet been added to the CMC table and which has the same hash value. If such a colour exists within the palette table, then the process returns to step S3 in which a colour pointer for the new colour is added to the same row of the CMC table as before. If there is not another colour in the palette table meeting the criteria of not having been added to the CMC table and having the same hash value, then the process moves from step S4 to step S5. In step S5, an attempt is made to locate within the palette table a colour that has not yet been added to the CMC table. If no such colour can be found in the palette table, then the process moves from step S5 to S6A. However, if in step S5 a palette colour is found that has not yet been added to the CMC table, then the process returns to step S2 and a hash value is deduced for the colour that was found in step S5.

Step S6A is concerned with the possibility that one or more CMC rows may not contain any colour pointers even after all of the palette colours have been processed in steps S1 to S5. In step S6A, any CMC table rows without colour pointers are identified. For each such row, the following steps are performed:

- the index of the row is subjected to the "inverse" of the hash function in order to produce a 24-bit RGB colour, which is called a "reconstituted colour". That is to say, quintets of zero bits are inserted after each of the third and sixth bits of the binary representation of the index value and a sextet of zero bits is inserted after the eighth bit. For example, if the "inverse" hash function operates on the decimal value 181 (which has the binary value 10110101 and which is index value of the 182nd row of the CMC (because the first row is labelled 0)), then the reconstituted 24-bit RGB colour is 10100000 10100000 01000000.
- the n palette colours having the smallest squared Pythagorean distance(s) to the reconstituted colour are determined and their colour pointers are placed in the row of the CMC table that corresponds to the reconstituted colour. In this embodiment n=4 but in general terms it simply denotes a group of one or more palette colours.

After step S6A, the process of populating the CMC table with colour pointers moves to step S6B and ends. Then, a flag value is added to each row of the CMC table. The flag value is a count of the number of colour pointers that have been placed in the respective row of the CMC table.

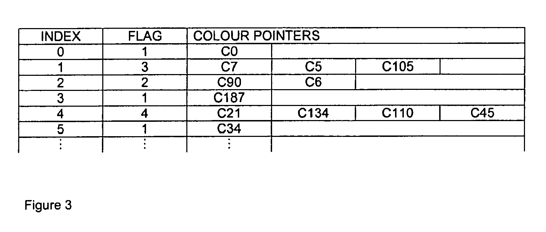

Figure 3 provides an example of how the CMC table might look. The left most column of the CMC table of Figure 3 represents the hash value that indexes the particular row. In Figure 3, the hash values are given in decimal representation and the colour pointers are denoted Cn where n is a decimal number in the range 0 to 255 specifying one of the palette table rows. In practice of course, the colour pointers are stored simply as 8-bit numbers. It will be seen that, for example, the row indexed by hash value decimal 1 contains three colour pointers. This means that palette colours C7, C5 and C105 all produce the binary hash value 00000001.

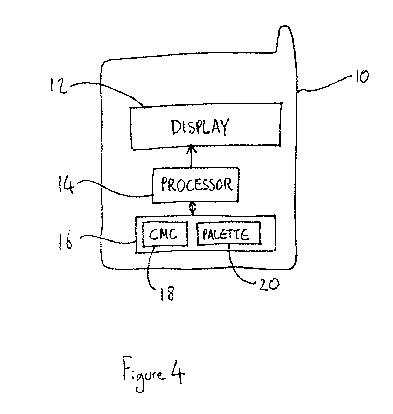

The palette table and CMC table can be loaded into non-volatile storage within a mobile telephone at manufacture. The telephone can then use these tables to render an imported 24-bit RGB image using its 256 colour palette. An example of such a telephone is shown in Figure 4.

As shown in Figure 4, the telephone 10 comprises a display device 12, e.g. an LCD screen, a microprocessor 14 and a memory 16. In practice, the telephone 10 comprises a great many other elements but, for purposes of clarity and brevity, only those most closely connected with an explanation of the embodiment of the invention are shown. The CMC table 18 and the palette table 20 are stored within the memory 16.

At times, the telephone 10 will be required to display imported 24-bit RGB images. For example, these images could be part of a video call that the telephone 10 is conducting or they could be received in multimedia messages. It is possible that such imported images, and indeed images native to the telephone 10, contain pixels specifying colours that do not appear in the 256 colour palette that is used by the display 12. The CMC and palette tables 18 and 20 ensure that an appropriate substitute is found for a pixel colour that is unsupported by the display 12, as will now be described.

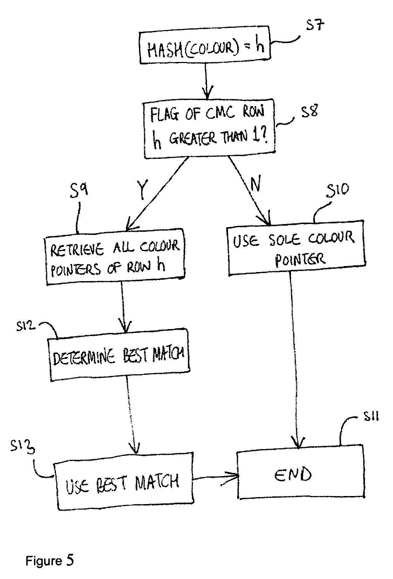

Consider the case where the processor 14 is required to write a 24-bit RGB image to the display device 12. The processor 14 subjects each pixel of the image to the routine shown in Figure 5.

In step S7 of Figure 5 the 24-bit colour of the pixel is subjected by the processor to the aforementioned hash function to yield a hash value h. In step S8, the processor 14 reads the flag value of row h of the CMC table 18. If the value of this flag is greater than one, then the process moves to step S9. Otherwise, the process moves to step S10 in which the sole colour pointer of row h of the CMC table 18 is retrieved. The processor 14 then accesses the row of the palette table 18 that is specified by the colour pointer and retrieves the corresponding 24-bit colour of the palette. This palette colour is then used to render the colour of the pixel in the display device 12. The routine then moves from step S10 to step S11 in which the routine ends.

In the event that the routine moves to step S9, however, then there are multiple colour pointers in row h of the CMC table. The processor 14 retrieves all of these colour pointers and accesses the corresponding rows of the palette table 18 to retrieve the 24-bit palette colours that correspond to the colour pointers. The routine moves from step S9 to step S12 in which it is determined which of the group of 24-bit palette colours is the best match for the 24-bit colour that was hashed in step S7. The processor 14 selects as the best match the palette colour from the group that has the smallest squared Pythagorean distance to the colour point that is hashed in step S7. The process then moves from step S12 to step S13 in which the palette colour that has been deemed the best match is used to render the pixel on the display device 12. The process then moves from step S13 to step S11 and ends.

As mentioned above, this process is repeated for each pixel of the 24-bit RGB image. In this way, the colours used in the original 24-bit RGB image are mapped to the best matching colours of the set of 256 colours that are available within the palette of the display device 12.

Thus, the processor 14 can map a 24-bit RGB image to the native colour palette in a manner that strikes a balance between the computationally intensive and memory intensive techniques that were mentioned in the introduction. The number of computations is kept low in that squared Pythagorean distance calculations are required for a relatively small group of colour mapping candidates from the palette table (and such calculations can of course be skipped altogether where the flag of a row of the CMC table indicates that there is only one colour pointer in that row). The memory requirement is kept low in that, at most only a handful of colour pointers need to be stored in each row of the CMC table (and the palette table itself may represent no additional overhead at all in the case where it is required for other image processing tasks within the telephone 10). On the assumption that each row of the CMC table contains five colour pointers, then the CMC table 18 is 5 x 256 =1280 bytes in size. The palette table 20 requires 4 x 256 =1024 bytes so the two tables together require 2304 bytes. This compares very favourably with the predicted 16 megabytes of memory required by the precomputation of the closest colour match as suggested in the introduction.

Various other embodiments can be conceived. For example, the hash function could be varied, as could the criterion for deciding which of a plurality of palette colours from a row of the CMC table is the best match to the colour of an image pixel. Also, it is possible to replace the colour pointers in the CMC table with their actual 24-bit palette colours, thereby eliminating the need for the palette table.

In other embodiments, the process of populating the CMC table omits step S6A such that the CMC table can contain rows devoid of colour pointers. Where such a CMC table is used, step S8 of colour matching routine of Figure 5 is modified to check additionally whether the flag indicates that the CMC row is devoid of colour pointers. If the flag indicates that the row contains no colour pointers, then, rather than proceeding to S9 or S10, the process moves to a step S8A (not shown) in which the palette colour having the smallest squared Pythagorean distance to the 24-bit RGB colour of the pixel is determined and used to represent the colour of the pixel as rendered on the telephone's display device.

**Claims**

1. A method of selecting a colour point from a first set of points in a colour space to stand in for a colour point from a second, larger set of colour points in said space, the method comprising:

   applying a hash function to the second set colour point to produce an address;
   retrieving via the address a group of one or more first set colour point identifiers, each identifier specifying a first set colour point that is capable of producing said address if subjected to the hash function; and
   where said group contains a plurality of first set colour points, determining which of them is the best match for said second set colour point according to a given error test.

2. A method according to claim 1, wherein a flag is appended to the group and method further comprises deducing from the flag whether there is more than one identifier in the group.

3. A method according to claim 1 or 2, wherein the error test comprises determining the distance within the colour space between said second set colour point and a first set colour point from said group.

4. A method according to claim 1, 2 or 3, wherein the second set colour point comprises multiple binary words each describing a colour component intensity and the hash function removes one or more of the least significant bits from at least one of the words.

5. A method according to any one of claims 1 to 4, wherein at least one of said identifiers is a pointer to a representation of the corresponding first set colour point.

6. Apparatus for selecting a colour point from a first set of points in a colour space to stand in for a colour point from a second, larger set of colour points in said space, the apparatus comprising:

   means for applying a hash function to the second set colour point to produce an address;
   data storage containing groups of one or more first set colour point identifiers, each group being indexed by an address and the first set colour point or points within the group being capable of producing said address if subjected to the hash function;

means for applying to the memory the address deduced from the second set colour point in order to retrieve the corresponding group of first set colour points; and

means for determining, in the case where the retrieved group contains multiple first set colour points, which of the first set colour points of the retrieved group is the best match for said second set colour point according to a given error test.

7. Apparatus according to claim 6, wherein at least one of said groups in the data storage has an associated flag signifying whether the group contains more than one first set colour point identifier.

8. Apparatus according to claim 6 or 7, wherein the error test comprises determining the distance in the colour space between the second set colour point and a first set colour point.

9. Apparatus according to claim 6, 7 or 8, wherein the second set colour point comprises multiple binary words each describing a colour component intensity and the hash function removes one or more of the least significant bits from at least one of the words.

10. Apparatus according to any one of claims 6 to 9, at least one of said identifiers is a pointer to a representation of the corresponding first set colour point that is stored elsewhere.

11. A method of indexing a set of colour points, the method comprising determining the point or points from the set that produce a given hash value when subjected to a given hash function and associating the point or points so determined as a group accessible via said hash value.

12. Data storage containing a set of colour point identifiers, wherein the storage contains groups of one or more of said identifiers, the point or points in each group producing the same hash value when subjected to a given hash function and each group being retrievable via its hash value.

13. A program for causing data processing apparatus to perform the method of any one of claims 1 to 5 or 11.

| INDEX | R | G | B |
|---|---|---|---|
| 0 | 00000000 | 00000000 | 00000000 |
| 1 | 00000000 | 00100000 | 00000000 |
| 2 | 00000000 | 00100000 | 01000000 |
| : | : | : | : |
| : | : | : | : |
| : | : | : | : |
| 255 | 10001000 | 10001100 | 11100001 |

Figure 1

Figure 2.

| INDEX | FLAG | COLOUR POINTERS | | | |
|-------|------|------|------|------|------|
| 0 | 1 | C0 | | | |
| 1 | 3 | C7 | C5 | C105 | |
| 2 | 2 | C90 | C6 | | |
| 3 | 1 | C187 | | | |
| 4 | 4 | C21 | C134 | C110 | C45 |
| 5 | 1 | C34 | | | |
| ⋮ | ⋮ | ⋮ | | | |

Figure 3

Figure 4

Figure 5

**European Patent Office**

**EUROPEAN SEARCH REPORT**

Application Number

EP 07 25 1778

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 728 398 B1 (HONDL CHRISTOPHER P [US]) 27 April 2004 (2004-04-27) | 1,3,5,6, 8,10-13 | INV. H04N1/60 H04N1/64 |
| Y | * the whole document * | 2,4 | |
| X | US 6 002 795 A (EAMES ANDREW [US] ET AL) 14 December 1999 (1999-12-14) | 1,6, 11-13 | |
| A | * column 6, line 44 - column 14, line 37; figure 4 * * claim 1 * | 2-5,7-10 | |
| Y | EP 0 565 795 A2 (ELECTRONICS FOR IMAGING INC [US]) 20 October 1993 (1993-10-20) | 2,4 | |
| A | * abstract * * page 9, line 31 - page 13, line 15 * | 1-13 | |

TECHNICAL FIELDS SEARCHED (IPC)

H04N

The present search report has been drawn up for all claims

| Place of search | Date of completion of the search | Examiner |
|---|---|---|
| The Hague | 14 September 2007 | Beugin, Anne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 07 25 1778

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2007

| Patent document cited in search report | | Publication date | Patent family member(s) | | Publication date |
|---|---|---|---|---|---|
| US 6728398 | B1 | 27-04-2004 | NONE | | |
| US 6002795 | A | 14-12-1999 | NONE | | |
| EP 0565795 | A2 | 20-10-1993 | DE 69230284 D1 | | 16-12-1999 |
| | | | DE 69230284 T2 | | 13-07-2000 |
| | | | JP 6187407 A | | 08-07-1994 |
| | | | US 5517334 A | | 14-05-1996 |
| | | | US 5343311 A | | 30-08-1994 |